Europäisches Patentamt

European Patent Office

Office européen des brevets

(19)

(11) Publication number: **0 177 510**
**B1**

(12) **EUROPEAN PATENT SPECIFICATION**

(45) Date of publication of patent specification: **25.10.89**

(21) Application number: **85901199.1**

(22) Date of filing: **08.02.85**

(86) International application number:
**PCT/US85/00199**

(87) International publication number:
**WO 85/04339 10.10.85 Gazette 85/22**

(51) Int. Cl.⁴: **B 01 D 13/04, B 01 D 39/00,
B 65 H 81/00**

(54) **BUNDLE WIND SYSTEM.**

(30) Priority: **23.03.84 US 592835**

(43) Date of publication of application:
**16.04.86 Bulletin 86/16**

(45) Publication of the grant of the patent:
**25.10.89 Bulletin 89/43**

(84) Designated Contracting States:
**BE DE FR GB SE**

(56) References cited:
**EP-A-0 009 374
EP-A-0 181 747
CA-A-1 136 595
US-A-2 858 992
US-A-2 995 311
US-A-3 111 279
US-A-3 794 468
US-A-4 140 637
US-A-4 368 124
US-A-4 430 219**

(73) Proprietor: **BAXTER INTERNATIONAL INC. (a
Delaware corporation)
One Baxter Parkway
Deerfield Illinois 60015 (US)**

(72) Inventor: **LEONARD, Ronald, J.
19211 Crowley Road
Harvard, IL 60033 (US)**
Inventor: **JOHNSON, Kenneth, M.
1905 Burr Oak Lane
Lindenhurst, IL 60046 (US)**

(74) Representative: **MacGregor, Gordon et al
ERIC POTTER & CLARKSON 14 Oxford Street
Nottingham, NG1 5BP (GB)**

EP 0 177 510 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

TECHNICAL FIELD

The present invention concerns a novel process for making a fiber bundle. The illustrative embodiment concerns a novel process for making a hollow fiber mass transfer device bundle and also concerns a novel mass transfer device bundle.

BACKGROUND ART

In United States Patent No. 3,794,468, issued February 26, 1974, in the name of Ronald J. Leonard for "Mass Transfer Device Having a Wound Tubular Diffusion Membrane" and assigned to the assignee of the present invention, a mass transfer device is disclosed. The mass transfer device disclosed in that patent is made by winding a length of a hollow tubular conduit of semipermeable membrane about a core to form a wound bundle similar to packages of kite string, in which individual adjacent windings in the same layer are generally parallel to each other, but individual adjacent windings of the conduit in adjacent layers define a angle to each other. The device of that patent is assembled by winding a length of the hollow tubular conduit of semipermeable membrane about a core in a plane which defines an acute angle to the longitudinal axis and intersects both ends of the core. Simultaneously, the core is rotated about its longitudinal axis, or the plane of winding is correspondingly rotated to the same effect, to laterally displace on the core each winding of conduit from its immediately preceding winding. The resulting wound structure allows a low cost construction of a high performance mass transfer device. The flow pattern is around the circumference of the cylindrical element formed by the winding process. However, as the flow goes around the circumference, it will encounter flow paths of different length. Additionally, since the core is rotated at a constant rotational velocity and the angular velocity of the wind is constant, the void fraction of the resulting structure increases radially outwardly of the bundle. In other words, the void fraction near the outside of the bundle will be greater than the void fraction on the inside of the bundle. As used herein, the term "void fraction" connotes the ratio of space to space and fiber, whereby a greater void fraction means more space.

We have discovered that performance of the mass transfer device is decreased if the void fraction near the outside of the bundle substantially greater than the void fraction near the inside of the bundle. If the mass transfer device is an oxygenator, for example, having a void fraction on the outside that is substantially larger than the void fraction on the inside results in a much larger blood flow rate on the outside because there is more resistance on the inside. As the void fraction on the outside becomes smaller, there is less flow rate on the outside. However, since the flow path on the outside is inherently longer than the flow path on the inside, if the void fraction were equal throughout the bundle, the flow rate on the outside would not be equal to the flow rate on the inside but the blood flow would be unequal because of the longest flow path on the outside.

We have discovered that an optimum hollow fiber oxygenator comprises a bundle in which the flow rate is substantially constant throughout the bundle, the blood outlet saturation is substantially constant throughout the bundle, and the void fraction increases slightly in the radial outward direction of the bundle. The present invention provides a novel process for obtaining this optimum device and also concerns a novel device having these optimum properties.

Although the illustrative embodiment of the invention relates to a hollow fiber mass transfer device such as an oxygenator, it is to be understood that the present invention may be applicable to other devices using other fibers. For example, the present invention could be used with non-permeable tubing such as employed in a heat exchanger. Further, the present invention could be used with an absorption filter, using an absorbent filter material such as polyesters or natural fibers. Other impregnated fibers could be employed in connection with the present invention.

For technological background, reference is also made to CA—A—1136595; EP—A—0181747 and EP—A—0009374.

The present invention provides a process for making a hollow fiber bundle for a mass transfer device in which a bundle is formed by winding a length of the fiber around a core from an arm moved by a winding arm drive mechanism in a plane that is at an acute angle with respect to the longitudinal axis of the core and is between opposite ends of the core, and providing relative rotation between said longitudinal axis and the position of the winding arm drive mechanism, characterised by increasing during winding of the fiber around the core, the ratio of (a) the angular velocity of the wind and (b) the relative rotational velocity between the longitudinal axis of the core and the position of the winding arm drive mechanism whereby the void fraction of radially-outward annuli of the wound bundle is less than the void fraction would be if the ratio remained constant.

In the illustrative embodiment, the outer 10 percent annulus of the bundle is wound at a ratio that is at least 5 percent greater than the ratio at which the inner 10 percent annulus is wound.

In the illustrative embodiment, the process is used for making a hollow fiber mass transfer device. The mass transfer device comprises a core with a hollow fiber bundle overlying the core and in symmetrical relationship to the longitudinal axis of the core.

A more detailed explanation of the invention is provided in the following description and claims, and is illustrated in the accompanying drawings.

BRIEF DESCRIPTION OF THE DRAWINGS

Figure 1 is a perspective view of a mass transfer device bundle, prior to its being enclosed within a housing, constructed in accordance with the principles of the present invention.

Figure 2 is a diagrammatic cross-sectional view of a wound bundle.

Figure 3 is a perspective view of a core and winding mechanism.

Figure 4 is a perspective view of a core for the purpose of showing a winding layout.

DETAILED DESCRIPTION OF THE ILLUSTRATIVE EMBODIMENT

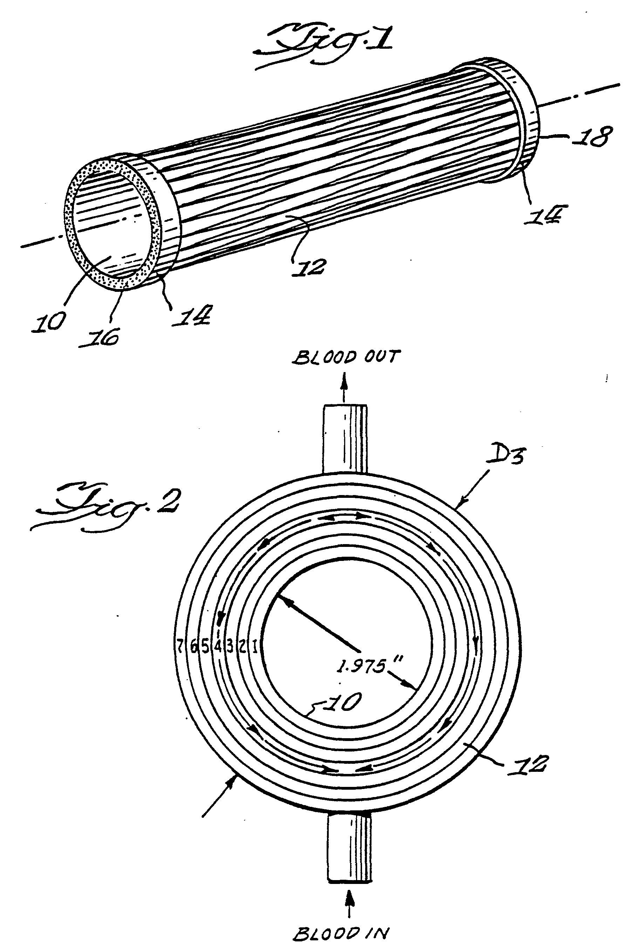

Referring to Figure 1, a core 10 having a bundle 12 formed by winding a hollow fiber around core 10 is illustrated. Figure 1 shows bundle 12 in a condition after the hollow fiber has been wound around the core 10, sealant bands 14 have been applied around the bundle, and the bundle has been cut transversely to form ends 16 and 18, as is disclosed in United States Patent No. 3,794,468. In Figure 1, bundle 12 is formed of a hollow fiber of semipermeable membrane that is wound about a core 10 to form a multi-layer winding of the fiber in which individual adjacent windings in the same layer are generally parallel to each other, but individual adjacent windings of the fiber in adjacent layers define an angle to each other. The ends of the core transverse to the fiber windings are then potted with a curable sealant. After cure of the sealant, the ends of the wound core are cut transversely through medial portions of the cured sealant to sever the fiber into a plurality of individual fibers, the resulting sections being secured together at their ends by portions of the cured sealant, and having their hollow bores open to the exterior. This structure is illustrated in Figure 1. Thereafter, manifolds are applied to provide an oxygen flow path through the hollow bores of the fiber portions and a blood flow path between the exteriors of the fiber portions.

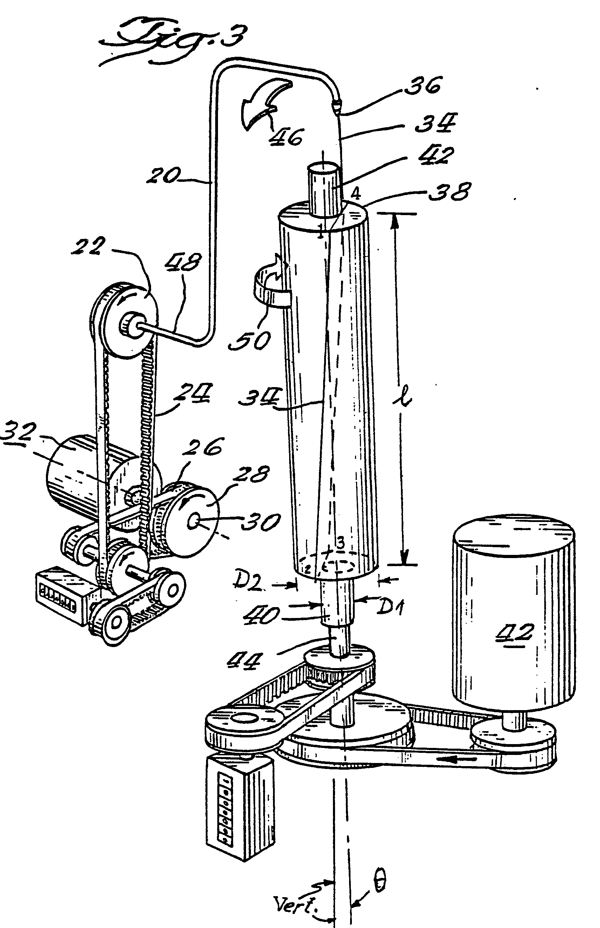

Figure 2 is a diagrammatic view of a cross-section of the bundle of Figure 1, with seven different annuli of the bundle being designated with the numbers 1 to 7. Annulus 1 is the innermost annulus of the bundle while number 7 is the outermost annulus of the bundle.

In prior art constructions, the bundle of Figure 1 has been wound with a constant winding ratio. As used herein, the term "winding ratio" connotes the ratio of (a) the angular velocity of the wind and (b) the relative rotational velocity between the longitudinal axis of the core and the position of the winding arm. With a constant winding ratio, the void fraction increases radially outwardly in the bundle. Thus referring to Figure 2, if the bundle is wound with a constant winding ratio, annulus 2 will have a greater average void fraction than annulus 1, annulus 3 has a greater void fraction than annulus 2, annulus 4 has a greater void fraction than annulus 3, etc. In addition, with a constant winding ratio the flow rate increases radially outwardly in the bundle. The blood saturation percentage decreases outwardly in the bundle and the pressure drop remains substantially constant throughout the bundle.

The following chart shows the void fraction, flow rate, blood saturation percentage, and pressure drop with respect to the numbered annuli in Figure 2, with a constant winding ratio of 360:1.

| ANNULUS NO. | WINDING RATIO | VOID FRACTION | FLOW RATE | SATURATION PERCENT | PRESSURE DROP |
|---|---|---|---|---|---|
| 1 | 360:1 | .5861 | 9.75 | 111.3 | 122 |
| 2 | 360:1 | .6044 | 11.17 | 108.4 | 122 |
| 3 | 360:1 | .6209 | 12.66 | 107.8 | 122 |
| 4 | 360:1 | .6362 | 14.17 | 107.4 | 122 |
| 5 | 360:1 | .6504 | 15.78 | 105.6 | 122 |
| 6 | 360:1 | .6636 | 17.43 | 104.4 | 122 |
| 7 | 360:1 | .6756 | 19.04 | 104.0 | 122 |

We have discovered that by increasing the winding ratio during winding of the bundle, a more effective mass transfer device can be provided.

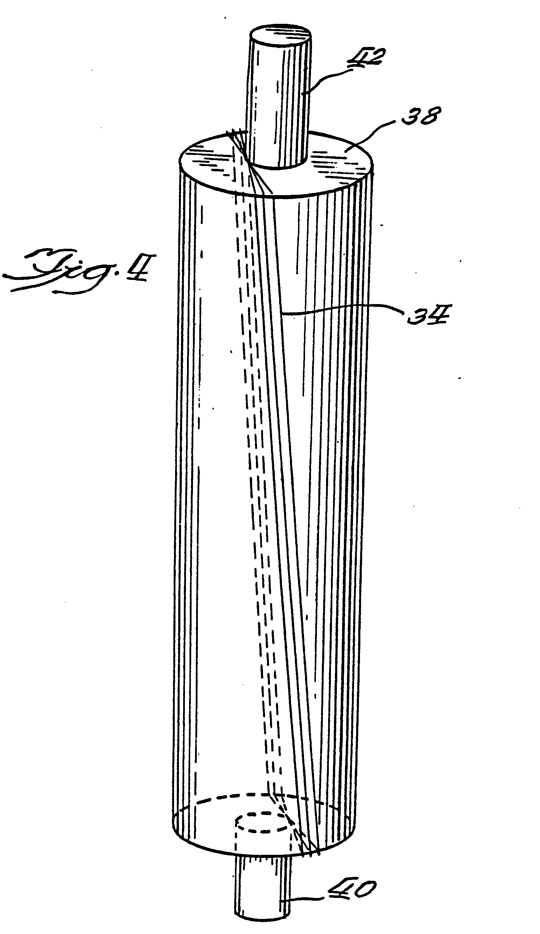

In Figure 3, an apparatus is illustrated for winding the bundle in accordance with the principles of the present invention. Referring to Figure 3, the apparatus comprises a winding arm 20 that is driven by pulley 22 coupled through belt drives 24 and 26 which are connected to pulley 28 that is keyed to the shaft 30 of motor 32. Arm 20 is hollow and a hollow fiber 34 from a suitable source (not shown) extends through arm 20 and out its distal end 36.

A core 38 having hollow end extensions 40, 42 is positioned on a spindle 44 with the end extensions 40, 42 being coaxial with the spindle 44 and the axis of the cylindrical core 38. Spindle 44 is driven by a suitable driving means, including a variable speed motor 42. The spindle and hence the core axis are at an acute angle θ with respect to the plane of the wind of winding arm 20, preferably 2.5 degrees. In this manner, with reference to Figure 3, when arm 20 is rotated, the wind will travel from point 1 which is in a plane on one side of extension 42 to point 2 which is in a plane on the opposite side of extension 42, to point 3 which is in a plane on the same side of extension 42 as point 2, and to point 4 which is in a plane on the same side of extension 42 as point 1. The resulting wind is illustrated in more detail in Figure 4. This wind is continued until an appropriately thick bundle is formed. The manner of winding is illustrated in Figure 3.

Referring to Figure 3, winding arm 20 moves in the direction of the arrow 46 about the axis of portion 48 of winding arm 20. The core rotates in the direction of arrow 50 about the axis of spindle 44 which, as stated above, is at an acute angle with respect to the direction of the wind and thus is not perpendicular to the axis of portion 48. In the illustrative embodiment, extensions 40, 42 have a .65 inch (16.5 mm) diameter and the core has a 1.975 inch (50 mm) outer diameter with a 9.95 inch (252 mm) length, as indicated in Figure 3. The winding continues until the bundle has an outer diameter of 2.626 inches, (66.7mm) as indicated in Figure 2.

In the illustrave embodiment, the rotational velocity of spindle 44 decreases during the winding of the bundle, while the angular velocity of arm 20 remains constant and the position of the winding arm drive mechanism remains constant. However, there are various ways of changing the ratio of (a) the angular velocity of the wind and (b) the relative rotational velocity between the longitudinal axis of the core and the position of the winding arm drive mechanism. For example, the winding arm drive may move, in a planetary manner, about the core, with decreasing planetary motion during winding. This will increase the ratio of (a) the angular velocity of the wind and (b) the relative rotational velocity between the longitudinal axis of the core and the position of the winding arm drive mechanism. Additionally, the rotational velocity of the core may be maintained constant while the position of the winding arm drive mechanism is maintained constant and while the angular velocity of the wind is increased during the winding of the bundle. It can be seen that there are many variations available for changing the ratio of (a) the angular velocity of the wind and (b) the relative rotational velocity between the longitudinal axis of the core and the position of the winding arm drive mechanism.

The following chart is correlated with Figure 2 and indicates the appropriate average winding ratios for the various annuli of the bundle, to achieve a constant void fraction throughout the bundle:

| ANNULUS NO. | WINDING RATIO | VOID FRACTION | FLOW RATE cc/s | SATURATION PERCENT | PRESSURE DROP mm Hg |
|---|---|---|---|---|---|
| 1 | 304:1 | .65 | 16.2 | 97.4 | 99.2 |
| 2 | 319:1 | .65 | 15.4 | 99.6 | 99.2 |
| 3 | 332:1 | .65 | 14.8 | 101.8 | 99.2 |
| 4 | 346:1 | .65 | 14.2 | 104.0 | 99.2 |
| 5 | 360:1 | .65 | 13.6 | 106.3 | 99.2 |
| 6 | 375:1 | .65 | 13.1 | 108.6 | 99.2 |
| 7 | 388:1 | .65 | 12.7 | 111.0 | 99.2 |

However, this bundle is not deemed optimum because the follow path lengths are more different than desired. A more ideal bundle has been developed in which the void fraction is not constant but is less variable throughout the bundle than would be if the winding ratio remained constant, the flow rate is substantially constant, and the blood saturation percentage is substantially constant. This more ideal bundle is wound using the following average winding ratio for the corresponding annuli of Figure 2.

| ANNULUS NO. | WINDING RATIO | VOID FRACTION | FLOW RATE cc/s | SATURATION PERCENT | PRESSURE DROP mm Hg |
|---|---|---|---|---|---|
| 1 | 333:1 | .6175 | 14.3 | 103.9 | 99.9 |
| 2 | 338:1 | .6291 | 14.3 | 103.9 | 99.9 |
| 3 | 342:1 | .6400 | 14.3 | 103.9 | 99.9 |
| 4 | 346:1 | .6501 | 14.2 | 103.9 | 99.9 |
| 5 | 351:1 | .6595 | 14.3 | 103.9 | 99.9 |
| 6 | 355:1 | .6682 | 14.3 | 103.9 | 99.9 |
| 7 | 359:1 | .6765 | 14.3 | 103.9 | 99.9 |

It can be seen that a process has been disclosed for making a bundle in which the flow rate is substantially constant throughout the bundle, the blood outlet saturation is substantially constant throughout the bundle, and the void fraction increases slightly in the radially outward direction of the bundle. It is preferred that the outer ten percent annulus of the bundle be wound as a winding ratio that is at least five per cent greater than the ratio at which the inner ten percent annulus is wound.

In the charts set forth above, the flow rate is in cubic centimeters per second and the pressure drop is in millimeters of mercury.

The invention is applicable to other devices using other fibers. Although illustrative embodiment of the invention have been shown and described, it is to be understood that various modifications and substitutions may be made by those skilled in the art.

## Claims

1. A process for making a hollow fiber bundle for a mass transfer device in which a bundle is formed by winding a length of the fiber around a core from an arm moved by a winding arm drive mechanism in a plane that is at an acute angle with respect to the longitudinal axis of the core and is between opposite ends of the core, and providing relative rotation between said longitudinal axis and the position of the winding arm drive mechanism, characterized by increasing during winding of the fiber around the core, the ratio of (a) the angular velocity of the wind and (b) the relative rotational velocity between the longitudinal axis of the core and the position of the winding arm drive mechanism whereby the void fraction of radially-outward annuli of the wound bundle is less than the void fraction would be if the ratio remained constant.

2. A process according to Claim 1, 2 or 3, wherein the outer 10 percent annulus of the bundle is wound at a ratio that is at least 5 percent greater than the ratio at which the inner 10 percent annulus is wound.

3. A process according to any preceding claim, including the step of positioning the core on a spindle coaxial with the longitudinal axis of the core, winding the hollow fiber in a manner so that each wind extends from within a plane that is on one side of the spindle to a plane that is on the other side of the spindle and then back to a plane on said one side of the spindle.

4. A process for making a hollow fiber mass transfer device wherein a hollow fiber is wound on a core by the process as defined in any preceding claim.

5. A hollow fiber mass transfer device comprising a hollow fiber bundle, in which the bundle is produced by the process of any one of claims 1 to 3.

## Patentansprüche

1. Verfahren zum Herstellen eines Hohlfaserbündels für eine Masseübertragungsvorrichtung, bei dem ein Bündel durch Wickeln eines Faserabschnitts um einen Kern herum mittels eines durch einen Wicklungsarm-Antriebsmechanismum bewegten Armes gebildet wird in einer Ebene, die mit der Längsachse des Kerns einen spitzen Winkel einschließt und sich zwischen den entgegengestzten Enden des Kerns erstreckt, und bei dem eine relative Drehung zwischen der Längsachse und der Stellung des Wicklungsarm-Antriebsmechanismus vorgesehen ist, gekennzeichnet durch Erhöhen des Verhältnisses von (a) der Wickel-Winkelgeschwindigkeit und (b) der relativen Drehgeschwindigkeit zwischen der Längsachse des Kerns und der Stellung des Wicklungsarm-Antriebsmechanismus, und zwar während des Wickelns der Faser um den Kern, wodurch der Hohlraumanteil der radial außen liegenden Ringlagen des gewickelten Bündels geringer ist als der Hohlraumanteil sein würde, wenn das Verhältnis konstant bliebe.

2. Verfahren nach Anspruch 1, bei dem die äußeren 10% der Ringlagen des Bündels in einem Verhältnis gewickelt sind, das wenigstens um 5% größer ist als das Verhältnis, mit dem die inneren 10% Ringlagen gewickelt sind.

3. Verfahren nach einem der vorhergehenden Ansprüche, umfassend den Schritt des Positionierens des Kerns auf einer mit der Längsachse des Kerns koaxialen Spindel, Wickeln der Hohlfaser derart, daß jede Wicklung sich von innherhalb eine Ebene, die auf einer Seite der Spindel liegt, zu einer Ebene, die auf der anderen Seite der Spindel liegt, und dann zurück zu der Ebene auf der einen Seite der Spindel erstreckt.

4. Verfahren zum Herstellung einer Hohlfaser-Masseübertragungsvorrichtung, bei dem eine Hohlfaser um einen Kern gewickelt wird gemäß einem der vorhergehenden Ansprüche.

5. Eine Hohlfaser-Masseübertragungsvorrichtung mit einem Hohlfaserbündel, bei der das Bündel gemäß dem Verfahren nach einem der Ansprüche 1 bis 3 hergestellt wird.

**Revendications**

1. Procédé de fabrication d'un faisceau de fibres creuses pour un dispositif de transfert de masse, dans lequel un faisceau est formé par enroulement d'une longueur de la fibre autour d'un noyau, à partir d'un bras déplacé par un mécanisme d'entraînement de bras d'enroulement dans un plan qui est incliné suivant un angle aigu par rapport à l'axe longitudinal du noyau et qui et situé entre les extrémités opposées du noyau, et par création d'une rotation relative entre ledit axe longitudinal et la position du mécanisme d'entraînement du bras d'enroulement, caractérisé en ce qu'on augmente, pendant l'enroulement de la fibre autour du noyau, le rapport de (a) la vitesse angulaire de l'enroulement (b) la vitesse de rotation relative entre l'axe longitudinal du noyau et la position du mécanisme d'entraînement du bras d'enroulement, de sorte que la fraction vide des anneaux disposés radialement vers l'extérieur du faisceau enroulé est inférieure à ce qu'elle serait si le rapport restait constant.

2. Procédé suivant la revendication 1, dans lequel l'anneau extérieur représentant 10% du faisceau est enroulé à un rapport qui est au moins de 5% supérieur au rapport auquel est enroulé l'anneau intérieur représentant 10% du faisceau.

3. Procédé suivant l'une quelconque des revendications précédentes, comprenant l'opération de mise en place du noyau sur une broche coaxiale à l'axe longitudinal du noyau, d'enroulement de la fibre creuse d'une manière telle que chaque enroulement s'étend à partir d'un plan qui est sur un côté de la broche jusqu'à un plan qui est sur l'autre côté de la broche, puis revient à un plan sur ledit premier côté de la broche.

4. Procédé de fabrication d'un dispositif de transfert de masse à fibres creuses, dans lequel une fibre creuse est enroulée sur un noyau par le procédé suivant l'une quelconque des revendications précédentes.

5. Dispositif de transfert de masse à fibres creuses comprenant un faisceau de fibres creuses, dans lequel le faisceau est fabriqué par le procédé suivant l'une quelconque des revendications 1 à 3.

*Fig.1*

18

14

12

10

16

14

BLOOD OUT

*Fig.2*

D3

7 6 5 4 3 2 1

1.975"

10

12

BLOOD IN

*Fig.3*

*Fig. 4*